# EUROPÄISCHE PATENTSCHRIFT

(11) **EP 4 474 678 B1**
(45) Veröffentlichungstag und Bekanntmachung des Hinweises auf die Patenterteilung: **06.08.2025**
(21) Anmeldenummer: 23177445.6
(22) Anmeldetag: 06.06.2023
(51) Int. Cl.: F16H 35/10, F16H 55/14, F16D 7/00, F16D 7/10, H02K 7/116

(54) **VERSTELLANTRIEB MIT SICHERHEITSKUPPLUNG**
ADJUSTMENT DRIVE WITH OVERLOAD CLUTCH
ENTRAÎNEMENT DE RÉGLAGE AVEC EMBRAYAGE DE SÉCURITÉ

(43) Veröffentlichungstag der Anmeldung: 11.12.2024
(73) Patentinhaber: Magna Auteca GmbH, 8160 Krottendorf bei Weiz (AT)
(72) Erfinder: SCHADLER, Bernhard Hubert, 8211 Gersdorf an der Feistritz (AT); PALVOELGYI, Martin, 8311 Markt Hartmannsdorf (AT)
(74) Vertreter: Zangger, Bernd

(56) Entgegenhaltungen:
- EP-A1- 3 483 477
- EP-A1- 3 567 277
- US-A1- 2014 157 926

## Beschreibung

### Gebiet der Erfindung

Die vorliegende Erfindung betrifft einen Verstellantrieb, umfassend einen Elektromotor und ein Getriebe mit einer selbsthemmenden Getriebestufe, insbesondere einen Verstellantrieb in einem Kraftfahrzeug.

### Stand der Technik

Es ist bekannt, dass in Kraftfahrzeugen Verstellantriebe verwendet werden, um beispielsweise Klappen oder Türen mit Hilfe eines elektrischen Antriebs zu betätigen. Solche Verstellantriebe verwenden meist möglichst kleine Elektromotoren und oft mehrstufige Getriebe zur Übersetzung des Drehmoments. Oft verwenden derartige mehrstufige Getriebe von Verstellantrieben eine selbsthemmende Getriebestufe und bilden somit selbsthemmende Getriebe.

Um ein selbsthemmendes Getriebe vor Beschädigungen zu schützen ist es oftmals notwendig eine Sicherheitskupplung zu verbauen die im Falle eines zu großen äußeren Moments die selbsthemmende Getriebestufe vom extern eingebrachten Moment trennt. Speziell bei elektrischen Klappen, Griffen und Türen ist oftmals auch eine manuelle Betätigung (tip to run) vorgesehen, die in weiterer Folge den elektrischen Mechanismus (Getriebe) aktiviert. In der Regel wird die manuelle Bewegung durch ein teilweises auskuppeln der Kupplung in Kombination mit einer Winkelmessung erfasst und als Bewegungsanforderung and den Motor verarbeitet.

Die Haptik einer manuell induzierten Bewegung (tip to run) ist vom Kupplungsmoment abhängig, und es ist schwer einen Konsens zwischen Haptik und Sicherheitskupplung für den Schutz des Getriebes zu erreichen. Zudem ist beim Einsatz eines Standardgetriebes in verschiedenen Endanwendungen immer wieder das sicherheitsrelevante Bauteil neu auf die Anwendung abzustimmen, um den haptischen Anforderungen gerecht zu werden.

Aus der EP 3 483 477 A1 ist eine Antriebsanordnung, zur Verstellung einer Aerodynamikklappe an einem Fahrzeug bekannt, umfassend einen Elektromotor, ein mehrstufiges Getriebe, eine Abtriebswelle und mindestens zwei Gehäusehälften, wobei das Getriebe Stirnräder umfasst und mindestens eine selbsthemmende Getriebestufe umfasst, wobei die selbsthemmende Getriebestufe weder die erste noch die letzte Getriebestufe des Getriebes bildet.

### Zusammenfassung der Erfindung

Es ist eine Aufgabe der Erfindung, einen Verstellantrieb der genannten Art in dieser Hinsicht zu verbessern und insbesondere einen Verstellantrieb, umfassend einen Elektromotor und ein Getriebe mit einer selbsthemmenden Getriebestufe anzugeben, der eine Sicherheitskupplung und eine gewünschte Haptik bei einer manuellen Betätigung (tip to run) ermöglicht und flexibel für verschiedene Anforderungen anpassbar ist.

Die Lösung der Aufgabe erfolgt durch einen Verstellantrieb, umfassend einen Elektromotor und ein Getriebe mit einer selbsthemmenden Getriebestufe und mit einem Abtrieb, wobei das Getriebe eine Sicherheitskupplung umfasst, die dazu eingerichtet ist, die selbsthemmende Getriebestufe im Fall eines zu großen äußeren, also über den Abtrieb eingebrachten, Moments, vom äußeren Moment zu trennen, wobei die Sicherheitskupplung ein motorseitiges Zahnrad und ein abtriebsseitiges Zahnrad umfasst, wobei die Sicherheitskupplung Kupplungselemente für eine formschlüssige Verbindung zwischen motorseitigem Zahnrad und abtriebsseitigem Zahnrad verwendet, wobei die Kupplungselemente im Fall eines zu großen äußeren, also über den Abtrieb eingebrachten, Moments, durch das zu große äußere Moment aus der formschlüssigen Verbindung und somit aus zumindest einer Kupplungskontur gedrückt werden, sodass die selbsthemmende Getriebestufe vom äußeren Moment getrennt wird,
wobei die Sicherheitskupplung einen Freigang aufweist, wobei der Freigang durch die zumindest eine Kupplungskontur im motorseitigen Zahnrad oder im abtriebsseitigen Zahnrad gebildet wird, wobei zumindest ein Rastelement, das mit dem anderen der beiden Zahnräder, abtriebsseitiges Zahnrad oder motorseitiges Zahnrad, drehfest ist, durch ein Federelement gegen zumindest eine Rastkontur vorgespannt wird, so dass die Haptik einer äußeren, also über den Abtrieb eingebrachten, Bewegungsanforderung durch die Form der Rastkontur bestimmt ist und somit durch die Rastkontur eine haptikbestimmende Rastung ausgebildet wird.

Erfindungsgemäß verfügt ein Verstellantrieb über eine Sicherheitskupplung, die eine selbsthemmende Getriebestufe des Getriebes des Verstellantriebes, bei einem zu großen äußeren Moment von diesem äußeren Moment trennen kann, also im Fall eines großen aufgebrachten Moments öffnet. Die Sicherheitskupplung kann zwischen zwei Zahnrädern des Getriebes des Verstellantriebes eingerichtet sein, insbesondere zwischen zwei koaxialen Zahnrädern.

Der Verstellantrieb verfügt außerdem über einen Freigang, um eine Bewegungsanforderung von außen aufzunehmen. Die Bewegungsanforderung kann detektiert werden und daraufhin der Elektromotor und somit der Verstellantrieb aktiviert werden. Eine derartige Funktionalität wird auch als "tip to run" Mechanismus bezeichnet.

Erfindungsgemäß sind in der Kupplung zwei unterschiedliche drehmomentübertragende Konturen vorgesehen - nämlich zumindest eine Kupplungskontur und zumindest eine Rastkontur, die nicht von der selben Kontur gebildet werden. Eine Art von Kontur weist einen Freigang auf, wodurch zumindest eine, bevorzugt mehrere umfänglich verteilte, Kupplungskonturen gebildet werden, wobei zumindest ein Kupplungselement, durch ein Federelement gegen die Kupplungskontur vorgespannt wird. Um einen Freigang bilden zu können, ist die Kupplungskontur dabei breiter ausgebildet als das in die Kupplungskontur eingreifende Kupplungselement. Nach Überwindung des Freigangs bilden die seitlichen Begrenzungen der Kupplungskontur einen Formschluss, der das Moment der Sicherheitskupplung bestimmt.

Die zweite Art der drehmomentübertragenden Konturen bilden Rastkonturen, die nach gewünschter Haptik geformt werden können, durch diese kann gezielt die Haptik einer Bewegungsanforderung verändert und somit eingestellt werden, weiters wirken diese auf den Freigang dämpfend.

Durch den Einsatz einer Kupplung mit einem in die Kupplung integrierten gedämpften Freigang ist es daher möglich, die Haptik der induzierten Bewegung unabhängig zur Auskuppelfunktion der Sicherheitskupplung auf einen jeweiligen Mechanismus einzustellen.

Durch den Einsatz von geeignet geformten Rastkonturen und Rastelementen, sowie durch Verwendung von Federelementen mit den gewünschten Eigenschaften in der Sicherheitskupplung, ist es möglich verschiedene haptische Variationen ohne großen Kosteneinsatz zu realisieren, da die sicherheitsrelevante Funktion der Kupplung von den haptischen Einstellungen nicht betroffen ist.

Weiterbildungen der Erfindung sind in den abhängigen Ansprüchen, der Beschreibung sowie den beigefügten Zeichnungen angegeben.

Vorzugsweise umfasst der Verstellantrieb einen Winkelmesssensor und eine Steuerungseinheit, wobei die Steuerungseinheit und der Winkelmesssensor dazu eingerichtet sind, dass der Winkelmesssensor die äußere Bewegungsanforderung erfasst und daraufhin die Steuerungseinheit den Elektromotor aktiviert.

Bevorzugt bildet die Kupplungskontur zur Bildung des Freigangs eine Ausnehmung aus, die breiter ist, als die Breite des Kupplungselements, das durch das Federelement gegen die Kupplungskontur vorgespannt wird. "Breite" meint dabei in dieser Schrift die Erstreckung in Umfangsrichtung des betreffenden Zahnrades.

Vorzugsweise sind zumindest manche Kupplungselemente auch Rastelemente und umgekehrt. Die Funktion eines Kupplungselements und eines Rastelements kann somit von ein und demselben Element erfüllt werden.

Bevorzugt unterscheiden sich die Form der Kupplungskonturen für Kupplungselemente, im motorseitigen Zahnrad oder im abtriebsseitigen Zahnrad, von der Form der Rastkonturen für die formschlüssige Verbindungen der haptikbestimmenden Rastung, in dem die Kupplungkonturen breiter ausgebildet sind, so dass sie einen Freigang ausbilden, und die Rastkonturen schmäler ausgebildet sind, so dass sie keinen Freigang ausbilden - sondern bevorzugt einen Formschluss.

Bevorzugt sind die Kupplungselemente, mittels der Federelemente - die auch die Rastelemente vorspannen - oder mittels von den Federelementen verschiedenen weiteren, also anderen Federelementen, in die formschlüssige Verbindung und somit in die Kupplungskontur hinein vorgespannt.

Die Kupplungselemente und/oder die Rastelemente können beispielsweise Kugeln umfassen oder Kugeln sein. Die Kugeln oder andere Fortsätze können beispielsweise am Ende eines Kupplungselements und/oder Rastelements ausgebildet sein und/oder können dazu ausgebildet sein, an den Rastkonturen oder Kupplungskonturen anzuliegen.

Bevorzugt sind Rastelemente und/oder Kupplungselemente einander gegenüberliegend angeordnet. Zumindest ein, bevorzugt zwei Federelemente, sind vorzugsweise zwischen den beiden Rastelementen und/oder zwei Kupplungselementen angeordnet, und spannen diese beiden Rastelemente und/oder Kupplungselemente voneinander entfernend in die Kupplungskontur und/oder in die Rastkontur hinein vor.

Entlang des Umfangs des Zahnrads, bevorzugt des motorseitigen Zahnrads, sind vorzugsweise drei oder mehr Rastkonturen und drei oder mehr Kupplungskonturen ausgebildet, wobei sich vorzugsweise die Rastkonturen und die Kupplungskonturen immer abwechseln.

Vorzugsweise sind das motorseitige Zahnrad und/oder das abtriebsseitige Zahnrad, zumindest axial abschnittsweise, hohl ausgeführt. Die Rastelemente und/oder die Kupplungselemente und/oder die Federelemente sind dann bevorzugt radial innerhalb des motorseitigen Zahnrads und/oder des abtriebsseitigen Zahnrads angeordnet.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Verstellantriebes.
- Fig. 2: ist eine seitliche Schnittansicht eines Teiles des Getriebes eines erfindungsgemäßen Verstellantriebes gemäß Fig. 1.
- Fig. 3: ist eine Ansicht von oben auf den Teil des Getriebes entsprechend Fig. 2.
- Fig. 4: ist eine Schnittansicht, geschnitten auf Höhe der Federelemente und Rastelemente, von oben auf den Teil des Getriebes entsprechend Fig. 2.
- Fig. 5: ist eine Detaildarstellung der linken Seite von Fig. 3.
- Fig. 6: ist eine Detaildarstellung der rechten Seite von Fig. 3.

### Detaillierte Beschreibung der Erfindung

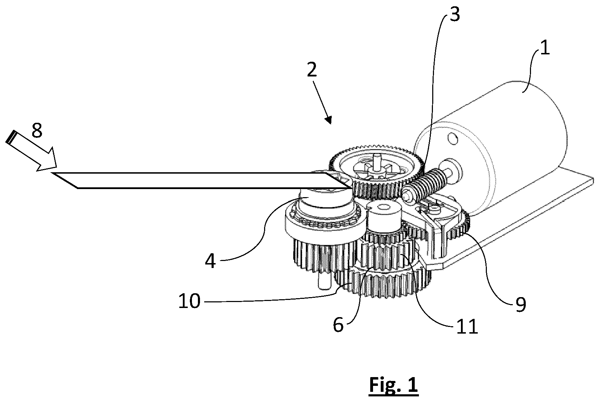

In Fig. 1 ist ein erfindungsgemäßer Verstellantrieb dargestellt, zusammen mit einer von außen, beispielsweise über einen Griff, auf den Abtrieb 4 des Verstellantriebes aufbringbaren Bewegungsanforderung 8, also eines äußeren Moments.

Der Verstellantrieb umfasst einen Elektromotor 1 und ein Getriebe 2. Das Getriebe 2 umfasst wiederum eine selbsthemmende Getriebestufe 3, die beispielsweise ein Schneckenrad verwenden kann, einen Abtrieb 4, über den ein zu verstellendes Element, wie eine Klappe, Tür etc, bewegt werden kann und weitere Getriebestufen, die zwischen der selbsthemmenden Getriebestufe 3 und dem Abtrieb 4 liegen können.

Das Getriebe 2 umfasst eine Sicherheitskupplung 6, die dazu eingerichtet ist, die selbsthemmende Getriebestufe 3 im Fall eines zu großen äußeren, also über den Abtrieb 4 eingebrachten, Moments, vom äußeren Moment zu trennen. Die Sicherheitskupplung 6 ist zwischen zwei koaxialen Zahnrädern, nämlich zwischen einem motorseitigen Zahnrad 10 und einem abtriebsseitigen Zahnrad 11, des Getriebes eingerichtet.

Der Verstellantrieb umfasst ferner einen Winkelmesssensor 9 und eine nicht dargestellte Steuerungseinheit, wobei die Steuerungseinheit und der Winkelmesssensor 9 dazu eingerichtet sind, dass der Winkelmesssensor 9 die äußere Bewegungsanforderung 8 erfasst und daraufhin, bei einer ausreichend starken Bewegungsanforderung 8 und ausreichend großer Winkeländerung, die Steuerungseinheit den Elektromotor 1 aktiviert.

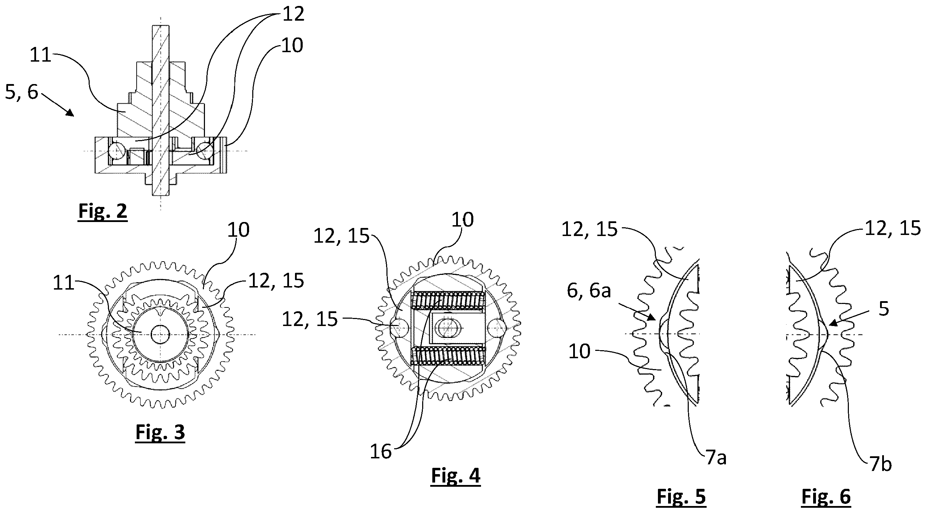

Das motorseitige Zahnrad 10 und das abtriebsseitige Zahnrad 11, zusammen mit der haptikbestimmenden Rastung 5 und der Sicherheitskupplung mit Freigang 6, sind in den Fig. 2 bis 6 näher dargestellt. Das motorseitige Zahnrad 10 ist zumindest axial abschnittsweise hohl ausgeführt, so dass die Elemente der haptikbestimmenden Rastung 5 und der Sicherheitskupplung mit Freigang 6 radial innerhalb des motorseitigen Zahnrads 10 angeordnet sein können. Durch das gemeinsame Zentrum des motorseitigen Zahnrads 10 und des abtriebsseitigen Zahnrads 11 kann eine gemeinsame Achse geführt sein.

Die haptikbestimmende Rastung 5 wird, wie in Fig. 2 dargestellt, gebildet aus einem motorseitigen Zahnrad 10 und einem abtriebsseitigen Zahnrad 11, sowie aus Rastelementen 12, die drehfest mit dem abtriebsseitigen Zahnrad 11 verbunden sein können und die formschlüssige Verbindungen mit Rastkonturen 7b am motorseitigen Zahnrad 10 eingehen können, zur Verbindung des motorseitigen Zahnrads 10 mit dem abtriebsseitigen Zahnrad 11.

Die haptikbestimmende Rastung 5 verwendet, wie in Fig. 4 und Fig. 6 gut ersichtlich, mehrere umfänglich verteilte Rastelemente 12, nämlich im dargestellten Fall mit endseitigen Kugeln, für eine formschlüssige Verbindung zwischen motorseitigem Zahnrad 10 und abtriebsseitigem Zahnrad 11, wobei die Rastselemente 12 im Fall einer äußeren Bewegungsaufforderung, also ein über den Abtrieb 4 eingebrachten Moments, durch das äußere Moment aus der formschlüssigen Verbindung gedrückt werden, sodass sich das abtriebsseitige Zahnrad gegenüber der selbsthemmenden Getriebestufe 3 um den Freigang 6 drehen kann. Die Kugeln der Rastelemente 12 sind an radialen Endbereichen der Rastelemente 12 angeordnet. Die Rastelemente 12 sind mittels Federelementen 16, zum Beispiel-Schraubendruckfedern, in die formschlüssige Verbindung hinein, also zum geschlossenen Zustand der Kupplung, vorgespannt. Die Stärke der Federelemente 16, die Form der Rastelemente 12 und die Form der Rastkontur 7b bestimmen das am Abtrieb spürbare Gegenmoment bei Bewegungsaufforderung, also die Haptik der tip to run Funktion.

Die Sicherheitskupplung 6 weist einen Freigang 6a auf, wobei der Freigang 6a durch Kupplungskonturen 7a an der radial innen liegenden Seite des hohlen motorseitigen Zahnrads 10 gebildet wird, wobei Kupplungselemente 12, die mit dem abtriebsseitigen Zahnrad 11 drehfest sind, durch Federelemente 16 gegen die Kupplungskonturen 7a vorgespannt werden. Die Haptik einer äußeren, also über den Abtrieb 4 eingebrachten, Bewegungsanforderung 8 ist daher durch den Freigang 6a nicht beeinflusst. Die Randbereiche der Kupplungskontur 7a, die Begrenzungen des Freigangs 6a, bestimmen das größtmöglich übertragbare Moment der Sicherheitskupplung. Beim Anlegen eines zu großen äußeren Moments am Abtrieb 4 werden zuerst die Rastelemente 12 aus der haptikbestimmenden Rastung 5 herausgedrückt und das abtriebsseitige Kupplungsrad lässt sich mit einem gewissen, über die Rastkontur 7b bestimmten, Gegenmoment im Freigang 6a gegenüber der selbsthemmenden Getriebestufe 3 drehen. Ist der Freigang 6a aufgebraucht und das äußere Moment groß genug, um die Kupplungselemente 15 über die Kupplungskontur 7b nach innen zu drücken, dann ist der Abtrieb 4 von der selbsthemmenden Getriebestufe 3 vollständig getrennt.

Die Kupplungskonturen 7a bilden zur Bildung des Freigangs 6a Ausnehmungen aus, die breiter sind, als die Breite der in die Kupplungskonturen 7a eingreifenden radialen Enden der Kupplungselemente 15, die durch das Federelement 16 gegen die Kupplungskonturen 7a vorgespannt werden.

Die Rastelemente 12 sind gleichzeitig Kupplungselemente 15. Es unterscheiden sich lediglich die Form der Kupplungskonturen 7a für Kupplungselemente 15, im motorseitigen Zahnrad 10, von der Form der Rastkonturen 7b für die formschlüssigen Verbindungen der haptikbestimmenden Rastung 5, in dem die Kupplungskonturen 7a breiter ausgebildet sind, so dass sie einen Freigang 6a ausbilden, und die Rastkonturen 7b schmäler ausgebildet sind, so dass sie keinen Freigang ausbilden.

Die Kupplungselemente 15 sind mittels der Federelemente 16 in die formschlüssige Verbindung und somit in die Kupplungskontur 7a hinein vorgespannt, so wie die Rastelemente 12 mittels der Federelemente 16 in die Rastkontur 7b hinein vorgespannt sind. Die Kupplungselemente 15 und die Rastelemente 12 umfassen an deren radialen Enden Kugeln oder andere Erhebungen.

Wie in Fig. 4 gut ersichtlich, sind zwei Rastelemente 12, die auch zwei Kupplungselemente 15 darstellen, einander gegenüberliegend angeordnet und sind zwei Federelemente 16 zwischen den beiden Rastelementen 12 bzw. zwischen den zwei Kupplungselementen 15 angeordnet, um die beiden Elemente auseinanderzudrücken und in die Kupplungskonturen 7a und in die Rastkonturen 7b hin vorzuspannen.

Um ein selbsthemmendes Getriebe vor Beschädigungen zu schützen ist somit eine Sicherheitskupplung 6 verbaut. Um eine Bewegungsanforderung 8 (tip to run) zu erkennen, ist zwischen der selbsthemmenden Getriebestufe 3 und dem antriebsseitigen Zahnrad 10 der Kupplung 6 ein Winkelmesssensor 9, zum Beispiel ein Potentiometer oder Halleffektsensor, vorgesehen. Um die haptischen Anforderungen der Bewegungsanforderung 8 (tip to run) einstellbar zu machen, ist in der Kupplung 6 ein Freigang 6a und eine einfach änderbare Rastkontur 7b vorgesehen.

Der Freigang 6a ermöglicht eine Rotation des rückgetriebenen Zahnrades an der Abtriebseite 11 relativ zum antriebsseitigen Zahnrad 10, ohne den Auskuppelmechanismus der Sicherheitskupplung 6 zu aktivieren.

Zur Definition des Kupplungsmomentes werden Kupplungselemente 15 eingebracht, die mittels Federelemente 16 am Ende des Freigangs 6a über die Kupplungskontur 7a nach innen gedrückt werden müssen. Zur Definition der Haptik der Bewegungsanforderung 8 (tip to run) und zur Bedämpfung des Freigangs 6a werden Rastelemente 12 eingebracht, die mittels Federelemente 16 in Rastkonturen 7b eingreifen. Die Einstellung des Kupplungsmoments und das Moment für die Bewegungsanforderung 8 wird durch die Kontur an den jeweiligen Rasten, also die Rastkonturen 7a und 7b, in Kombination mit den Federelementen 16 definiert. Durch Änderung der Rastkonturen 7b ist eine unabhängige Einstellung der Drehmomente zur Bewegungsanforderung 8 und zum Auslösen der Sicherheitskupplung 6 möglich.

Durch den Einsatz unabhängiger Rastkonturen 7b und einem Freigang 6a in der Sicherheitskupplung 6 ist es möglich bei Verwendung gemeinsamer Federelemente 16 verschiedene haptische Variationen durch Veränderung der Rastkontur 7b zu realisieren, da die sicherheitsrelevante Funktion der Kupplung von den haptischen Einstellungen getrennt ist.

Möglich ist auch ein Einsatz unabhängiger Federelemente für Rastelemente und Kupplungselemente, um eine zusätzliche Einstellbarkeit der Rastmomente zu erzeugen.

Übt eine Person auf das mit dem Abtriebsrad 4 verbundene Bauteil, beispielsweise eine Klappe, ein Griff, oder ähnliches, ein Moment aus, so ist dieses Bauteil entsprechend der Form der Rastkontur 7b und der Größe und Form des Freigangs 6a nachgiebig. Das für die Person spürbare Gegenmoment (Haptik) wird dabei durch die Rastkontur 7b bestimmt. Die dabei auftretende Rotation des Abtriebs kann über einen Winkelsensor 9 detektiert werden und als Anstoß für eine elektrische Verstellung verwendet werden.

### Bezugszeichenliste

- 1: Elektromotor
- 2: Getriebe
- 3: Selbsthemmende Getriebestufe
- 4: Abtrieb
- 5: haptikbestimmende Rastung
- 6: Sicherheitskupplung
- 6a: Freigang
- 7a: Kupplungskontur (breit)
- 7b: Rastkontur (schmal)
- 8: Bewegungsanforderung
- 9: Winkelmesssensor
- 10: motorseitiges Zahnrad
- 11: abtriebsseitiges Zahnrad
- 12: Rastelement
- 15: Kupplungselement
- 16: Federelement

## Patentansprüche

1. Verstellantrieb, umfassend einen Elektromotor (1) und ein Getriebe (2) mit einer selbsthemmenden Getriebestufe (3) und mit einem Abtrieb (4), wobei das Getriebe (2) eine Sicherheitskupplung (6) umfasst, die dazu eingerichtet ist, die selbsthemmende Getriebestufe (3) im Fall eines zu großen äußeren, also über den Abtrieb (4) eingebrachten, Moments, vom äußeren Moment zu trennen, wobei die Sicherheitskupplung (6) ein motorseitiges Zahnrad (10) und ein abtriebsseitiges Zahnrad (11) umfasst, wobei die Sicherheitskupplung (6) Kupplungselemente (15) für eine formschlüssige Verbindung zwischen motorseitigem Zahnrad (10) und abtriebsseitigem Zahnrad (11) verwendet, wobei die Kupplungselemente (15) im Fall eines zu großen äußeren, also über den Abtrieb (4) eingebrachten, Moments, durch das zu große äußere Moment aus der formschlüssigen Verbindung und somit aus zumindest einer Kupplungskontur (7a) gedrückt werden, sodass die selbsthemmende Getriebestufe (3) vom äußeren Moment getrennt wird,
**dadurch gekennzeichnet , dass** die Sicherheitskupplung (6) einen Freigang (6a) aufweist, wobei der Freigang (6a) durch die zumindest eine Kupplungskontur (7a) im motorseitigen Zahnrad (10) oder im abtriebsseitigen Zahnrad (11) gebildet wird, wobei zumindest ein Rastelement (12), das mit dem anderen der beiden Zahnräder, abtriebsseitiges Zahnrad (11) oder motorseitiges Zahnrad (10), drehfest ist, durch ein Federelement (16) gegen zumindest eine Rastkontur (7b) vorgespannt wird, so dass die Haptik einer äußeren, also über den Abtrieb (4) eingebrachten, Bewegungsanforderung (8) durch die Form der Rastkontur (7b) bestimmt ist und somit durch die Rastkontur (7b) eine haptikbestimmende Rastung (5) ausgebildet wird.

2. Verstellantrieb nach Anspruch 1,
**dadurch gekennzeichnet, dass** der Verstellantrieb einen Winkelmesssensor (9) und eine Steuerungseinheit umfasst, wobei die Steuerungseinheit und der Winkelmesssensor (9) dazu eingerichtet sind, dass der Winkelmesssensor (9) die äußere Bewegungsanforderung (8) erfasst und daraufhin die Steuerungseinheit den Elektromotor (1) aktiviert.

3. Verstellantrieb nach zumindest einem der vorhergehenden Ansprüche,
**dadurch gekennzeichnet, dass** die Kupplungskontur (7a) zur Bildung des Freigangs (6a) eine Ausnehmung bildet, die breiter ist, als die Breite des Kupplungselements (15), das durch das Federelement (16) gegen die Kupplungskontur (7a) vorgespannt wird.

4. Verstellantrieb nach zumindest einem der vorhergehenden Ansprüche,
**dadurch gekennzeichnet, dass** zumindest manche Kupplungselemente (15) auch Rastelemente (12) sind und umgekehrt, und/oder dass sich lediglich die Form der Kupplungskonturen (7a) für Kupplungselemente (15), im motorseitigen Zahnrad (10) oder im abtriebsseitigen Zahnrad (11), von der Form der Rastkonturen (7b) für die haptikbestimmenden Rastung (5) unterscheiden, in dem die Kupplungskonturen (7a) breiter ausgebildet sind, so dass sie einen Freigang (6a) ausbilden, und die Rastkonturen (7b) schmäler ausgebildet sind, so dass sie keinen Freigang ausbilden.

5. Verstellantrieb nach zumindest einem der vorhergehenden Ansprüche,
**dadurch gekennzeichnet, dass** die Kupplungselemente (15), mittels der Federelemente (16) oder mittels von den Federelementen (16) verschiedenen weiteren Federelementen, in die formschlüssige Verbindung und somit in die Kupplungskontur (7a) hinein vorgespannt sind.

6. Verstellantrieb nach zumindest einem der vorhergehenden Ansprüche,
**dadurch gekennzeichnet, dass** die Kupplungselemente (15) und/oder die Rastelemente (12) Kugeln umfassen oder Kugeln sind.

7. Verstellantrieb nach zumindest einem der vorhergehenden Ansprüche,
**dadurch gekennzeichnet, dass** Rastelemente (12) und/oder Kupplungselemente (15) einander gegenüberliegend angeordnet sind und zumindest ein, bevorzugt zwei Federelemente (16) zwischen den Rastelementen (12) und/oder Kupplungselementen (15) angeordnet sind und diese voneinander entfernend in die Kupplungskontur (7a) und/oder in die Rastkontur (7b) hinein vorspannen.

8. Verstellantrieb nach zumindest einem der vorhergehenden Ansprüche,
**dadurch gekennzeichnet, dass** das motorseitige Zahnrad (10) und/oder das abtriebsseitige Zahnrad (11) zumindest axial abschnittsweise hohl ausgeführt sind und dass die Rastelemente (12) und/oder die Kupplungselemente (15) und/oder die Federelemente (16) radial innerhalb des motorseitigen Zahnrads (10) und/oder des abtriebsseitigen Zahnrads (11) angeordnet sind.

## Claims

1. Adjustment drive comprising an electric motor (1) and a transmission (2) having a self-locking transmission stage (3) and having a power take-off (4), wherein the transmission (2) comprises a safety coupling (6) which is configured to separate the self-locking transmission stage (3) in the event of an excessively great external torque, that is to say, a torque which is introduced via the power take-off (4), from the external torque, wherein the safety coupling (6) comprises a toothed wheel (10) on the motor and a toothed wheel (11) on the power take-off, wherein the safety coupling (6) uses coupling elements (15) for a positive-locking connection between the toothed wheel (10) on the motor and the toothed wheel (11) on the power take-off, wherein the coupling elements (15) are pressed in the event of an excessively great external torque, that is to say, a torque which is introduced via the power take-off (4), by the excessively great external torque out of the positive-locking connection and consequently out of at least one coupling contour (7a) so that the self-locking transmission stage (3) is separated from the external torque, **characterized in that** the safety coupling (6) has a free-running mechanism (6a), wherein the free-running mechanism (6a) is formed by the at least one coupling contour (7a) in the toothed wheel (10) on the motor or in the toothed wheel (11) on the power take-off, wherein at least one engaging element (12) which is rotationally secure with respect to the other of the two toothed wheels, the toothed wheel (10) on the motor or the toothed wheel (11) on the power take-off, is pretensioned by a resilient element (16) against at least one engaging contour (7b) so that the haptics of an external movement request (8), that is to say, a movement request (8) which is introduced via the power take-off (4), is determined by the form of the engaging contour (7b) and consequently an engagement (5) which determines the haptics is formed by the engaging contour (7b).

2. Adjustment drive according to Claim 1,
**characterized in that** the adjustment drive comprises an angle measuring sensor (9) and a control unit, wherein the control unit and the angle measuring sensor (9) are configured so that the angle measuring sensor (9) detects the external movement request (8) and subsequently the control unit activates the electric motor (1).

3. Adjustment drive according to at least one of the preceding claims, **characterized in that**, in order to form the free-running mechanism (6a), the coupling contour (7a) forms a recess which is wider than the width of the coupling element (15) which is pretensioned by the resilient element (16) against the coupling contour (7a).

4. Adjustment drive according to at least one of the preceding claims, **characterized in that** at least some coupling elements (15) are also engaging elements (12), and vice versa, and/or **in that** only the form of the coupling contours (7a) for coupling elements (15) in the toothed wheel (10) on the motor or the toothed wheel (11) on the power take-off differs from the form of the engaging contours (7b) for the haptic-determining engagement (5) in which the coupling contours (7a) are configured to be wider so that they form a free-running mechanism (6a) and the engaging contours (7b) are configured to be narrower so that they do not form a free-running mechanism.

5. Adjustment drive according to at least one of the preceding claims, **characterized in that** the coupling elements (15) are pretensioned by means of the resilient elements (16) or by means of other resilient elements which are different from the resilient elements (16) into the positive-locking connection and consequently into the coupling contour (7a).

6. Adjustment drive according to at least one of the preceding claims, **characterized in that** the coupling elements (15) and/or the engaging elements (12) comprise balls or are balls.

7. Adjustment drive according to at least one of the preceding claims, **characterized in that** engaging elements (12) and/or coupling elements (15) are arranged opposite each other and at least one, preferably two resilient elements (16) are arranged between the engaging elements (12) and/or coupling elements (15) and pretension them away from each other into the coupling contour (7a) and/or into the engaging contour (7b).

8. Adjustment drive according to at least one of the preceding claims, **characterized in that** the toothed wheel (10) on the motor and/or the toothed wheel (11) on the power take-off are configured to be hollow, at least axially in portions, and **in that** the engaging elements (12) and/or the coupling elements (15) and/or the resilient elements (16) are arranged radially inside the toothed wheel (10) on the motor and/or the toothed wheel (11) on the power take-off.

## Revendications

1. Entraînement de réglage, comprenant un moteur électrique (1) et une transmission (2) présentant un étage de transmission autobloquant (3) et une sortie (4), la transmission (2) comprenant un embrayage de sécurité (6) qui est conçu pour séparer l'étage de transmission autobloquant (3) du couple externe dans le cas où celui-ci trop élevé, c'est-à-dire introduit par l'intermédiaire de la sortie (4), l'embrayage de sécurité (6) comprenant un pignon côté moteur (10) et un pignon côté sortie (11), l'embrayage de sécurité (6) utilisant des éléments d'embrayage (15) pour une liaison par complémentarité de forme entre le pignon côté moteur (10) et le pignon côté sortie (11), les éléments d'embrayage (15) étant repoussés hors de la liaison par complémentarité de forme et donc hors d'au moins un contour d'embrayage (7a) par le couple externe trop élevé en cas de couple externe trop élevé, c'est-à-dire introduit par l'intermédiaire la sortie (4), de sorte que l'étage de transmission autobloquant (3) est séparé du couple externe,
**caractérisé en ce que** l'embrayage de sécurité (6) présente un jeu libre (6a), le jeu libre (6a) étant créé par l'au moins un contour d'embrayage (7a) dans le pignon côté moteur (10) ou dans le pignon côté sortie (11), au moins un élément d'encliquetage (12), qui est solidaire en rotation de l'autre des deux pignons, à savoir le pignon côté sortie (11) ou le pignon côté moteur (10), est précontraint par un élément de ressort (16) contre au moins un contour d'encliquetage (7b), de sorte que la sensation haptique d'une demande de mouvement externe (8), c'est-à-dire introduite par l'intermédiaire la sortie (4), est déterminée par la forme du contour d'encliquetage (7b) et qu'ainsi une détente déterminant la sensation haptique (5) est créée par le contour d'encliquetage (7b).

2. Entraînement de réglage selon la revendication 1,
**caractérisé en ce que** l'entraînement de réglage comprend un capteur de mesure d'angle (9) et une unité de commande, l'unité de commande et le capteur de mesure d'angle (9) étant conçus de telle sorte que le capteur de mesure d'angle (9) détecte la demande de mouvement externe (8) et que l'unité de commande active ensuite le moteur électrique (1).

3. Entraînement de réglage selon au moins l'une des revendications précédentes,
**caractérisé en ce que** le contour d'embrayage (7a) forme un évidement pour la formation du jeu libre (6a), lequel est plus large que la largeur de l'élément d'embrayage (15) qui est précontraint par l'élément de ressort (16) contre le contour d'embrayage (7a).

4. Entraînement de réglage selon au moins l'une des revendications précédentes,
**caractérisé en ce qu'**au moins certains éléments d'embrayage (15) sont également des éléments d'encliquetage (12) et inversement, et/ou **en ce que** seule la forme des contours d'embrayage (7a) pour les éléments d'embrayage (15), dans le pignon côté moteur (10) ou dans le pignon côté sortie (11), diffère de la forme des contours d'encliquetage (7b) pour la détente déterminant la sensation haptique (5), les contours d'embrayage (7a) étant plus larges de manière à former un jeu libre (6a), et les contours
d'encliquetage (7b) étant plus étroits de manière à ne pas former de jeu libre.

5. Entraînement de réglage selon au moins l'une des revendications précédentes,
**caractérisé en ce que** les éléments d'embrayage (15) sont précontraints dans la liaison par complémentarité de forme et donc dans le contour d'embrayage (7a), au moyen des éléments de ressort (16) ou au moyen d'autres éléments de ressort différents des éléments de ressort (16).

6. Entraînement de réglage selon au moins l'une des revendications précédentes,
**caractérisé en ce que** les éléments d'embrayage (15) et/ou les éléments d'encliquetage (12) comprennent des billes ou sont des billes.

7. Entraînement de réglage selon au moins l'une des revendications précédentes,
**caractérisé en ce que** les éléments d'encliquetage (12) et/ou les éléments d'embrayage (15) sont agencés en vis-à-vis et n ce qu'au moins un, de préférence deux, éléments de ressort (16) sont agencés entre les éléments d'encliquetage (12) et/ou les éléments d'embrayage (15) et précontraignent ces derniers en les écartant l'un de l'autre dans le contour d'embrayage (7a) et/ou dans le contour d'encliquetage (7b).

8. Entraînement de réglage selon au moins l'une des revendications précédentes,
**caractérisé en ce que** le pignon côté moteur (10) et/ou le pignon côté sortie (11) sont réalisés en tout ou en partie de manière creuse axialement, et **en ce que** les éléments d'encliquetage (12) et/ou les éléments d'embrayage (15) et/ou les éléments de ressort (16) sont agencés radialement à l'intérieur du pignon côté moteur (10) et/ou du pignon côté sortie (11).
